# EUROPÄISCHE PATENTSCHRIFT

(11) **EP 1 391 798 B1**
(45) Veröffentlichungstag und Bekanntmachung des Hinweises auf die Patenterteilung: **30.11.2005**
(21) Anmeldenummer: 03017879.2
(22) Anmeldetag: 05.08.2003
(51) Int. Cl.: G05D 23/02

(54) **Temperaturweggeber**
Thermal linear actuator
Actionneur thermique linéaire

(30) Priorität: 20.08.2002 DE 20212748 U; 13.02.2003 DE 20302342 U
(43) Veröffentlichungstag der Anmeldung: 25.02.2004
(73) Patentinhaber: Otto Egelhof GmbH & Co. KG, 70736 Fellbach (DE)
(72) Erfinder: Pils, Peter, Dr., 70569 Stuttgart (DE); Baumann, Werner, 70736 Fellbach/Schmiden (DE)
(74) Vertreter: Manitz, Finsterwald & Partner GbR

(56) Entgegenhaltungen:
- DE-A- 3 002 229
- FR-A- 1 293 403
- FR-A- 2 303 275
- US-A- 5 052 181

## Beschreibung

Die vorliegende Erfindung betrifft einen Temperaturweggeber, insbesondere für temperaturabhängig geregelte Radiatorventile, mit einem Gehäuse, welches mit einem temperaturabhängig volumenveränderlichen Medium gefüllt ist, und einem das Gehäuse volumenveränderbar verschließenden, insbesondere als Balg ausgebildeten, mit einem Stellorgan koppelbaren und von dem Medium beaufschlagten Geber, der bei Temperaturänderungen entsprechend der dabei auftretenden Volumenänderung des Mediums von diesem verstellt wird.

Temperaturweggeber für Radiatorventile verwenden heutzutage entweder Gas als temperaturabhängig volumenveränderliches Medium, Dehnwachs oder eine Flüssigkeit. Diese Lösungen funktionieren im Prinzip gut, wobei Geräte mit Gas in der Herstellung teurer sind.

Bei mit Flüssigkeiten arbeitenden Temperaturaweggebern sind die Flüssigkeit, das Gehäuse und der üblicherweise metallene Balg so aufeinander abgestimmt, dass einerseits im Regelbereich, beispielsweise von +0°C bis +30°C eine im Wesentlichen lineare Ausdehnung vorliegt, also ein im Wesentlichen lineares Verhältnis zwischen Temperaturänderung und Stellweg, und dass andererseits der maximale Stellweg im Arbeitsbereich, beispielsweise von 0°C bis 60°C einen bestimmten Betrag nicht übersteigt. Auf diese Weise wird einerseits eine gute Regelung ermöglicht und andererseits gewährleistet, dass die Temperaturausdehnung nicht zu einer Zerstörung des Gehäuses führt. Dies kann mit den heutzutage gebräuchlichen Füllmitteln wie beispielsweise Ethylacetat erreicht werden.

Aufgrund gestiegener Energieeinsparanforderungen besteht das Bedürfnis, die Regelgenauigkeit im Regelbereich zu vergrößern. Hierfür ist es erforderlich, die Volumenausdehnung des Mediums pro Grad Temperaturänderung zu vergrößern, beispielsweise zu verdoppeln. Dies führt bei mit Flüssigkeit arbeitenden Temperaturweggebern jedoch zu einem entsprechend größeren maximalen Weg des Gebers im Arbeitsbereich. Dementsprechend muss das Gehäuse vergrößert werden.

Der Erfindung liegt die Aufgabe zugrunde, einen Temperaturweggeber der eingangs genannten Art anzugeben, der verhältnismäßig kostengünstig ist und eine Verfeinerung der Regelung im Regelbereich ermöglicht, ohne dass das Gehäuse übermäßig vergrößert werden muss. Auch soll die Funktionalität des Gebers möglichst-wenig beeinträchtigt werden

Diese Aufgabe wird dadurch gelöst, dass das Medium durch ein Gemisch aus einem Dehnwachs und einer mit dem Dehnwachs kompatiblen Flüssigkeit gebildet ist.

Durch die Verwendung eines Gemisches aus einem Dehnwachs und einer mit dem Dehnwachs kompatiblen Flüssigkeit kann einerseits eine hohe Volumenausdehnung im Regelbereich erreicht und andererseits die notwendige Vergrößerung des Gehäuses klein gehalten werden. Dehnwachse können so ausgebildet werden, dass sie in einem bestimmten Temperaturbereich durch die Aggregatzustandsänderung eine besonders hohe Volumenausdehnung und darüber eine geringe Volumenausdehnung aufweisen. Nachteilig bei den Wachsen ist jedoch ihre große Hysterese. Außerdem besteht das Problem im unteren Temperaturbereich, dass sich beim Übergang in den festen Aggregatzustand feste Partikel zwischen den Wellen des Balges festsetzen können. Außerdem sind die Rückstellkräfte verhältnismäßig groß.

Durch die Kombination eines Dehnwachses mit einer Flüssigkeit können diese Nachteile ausgeglichen werden. Sowohl die Hysterese als auch die Rückstellkräfte können dadurch auf ein akzeptables Maß verringert werden. Auch die Probleme mit festen Partikeln zwischen den Wellen des Balges sind deutlich geringer:

Vorteilhaft ist die Verwendung einer weitgehend inerten oder zumindest reaktionsträgen Flüssigkeit. Die Dauerhaltbarkeit des Temperaturweggebers kann hierdurch gut gewährleistet werden

Geeignet ist die Verwendung eines Lösungsmittels als Flüssigkeit. Durch die damit erreichbare gute Mischung mit dem Dehnwachs können gute Ergebnisse erzielt werden.

Gute Ergebnisse können auch mit lösungsmittelähnlichen Mitteln erzielt werden, in welchem das Dehnwachs weitgehend homogen, insbesondere emulsionsartig verteilbar ist. Neben einer gleichmäßigen Ausdehnung ist hier insbesondere die Gefahr, die von festen Partikeln zwischen den Wellen des Balges ausgehen kann, deutlich verringert.

Besonders gute Ergebnisse können mit Öl oder ölähnlichen Mitteln als Flüssigkeit erreicht werden, wobei insbesondere Siliconöle und Paraffinöle in Betracht kommen.

Durch Verwendung einer Flüssigkeit mit geringer Hysterese in Bezug auf die Wärmeausdehnung kann die Hysterese des Dehnwachses besonders gut ausgeglichen werden. Insgesamt kann so über den gesamten Regelbereich ein gutes Regelverhalten erzielt werden.

Der Anteil von Dehnwachs im Gemisch beträgt insbesondere zwischen ca. 25 % und ca. 50 %. In diesem Bereich lassen sich gute Ergebnisse hinsichtlich der Regelgenauigkeit und der Hysterese erzielen.

Als Flüssigkeit kann beispielsweise ein übliches, flüssiges Füllmittel für Temperaturweggeber der genannten Art vorgesehen sein. Diese weisen einerseits eine geringe Hysterese auf und sind andererseits für eine gute Mischung mit Dehnwachsen geeignet.

Als Dehnwachs wird bevorzugt ein Wachs mit hoher, zumindest weitgehend linearer Ausdehnung im Regelbereich und möglichst geringer Ausdehnung darüber vorgesehen. Derartige Wachse können nach Bedarf zur Verfügung gestellt werden. Insbesondere können hierzu paraffinische Gemische von gesättigten, vorwiegend geradkettigen oder verzweigten Kohlenwasserstoffen mit einer Kettenlänge von mehr als zwanzig Kohlenstoffatomen verwendet werden. Üblicherweise werden hierfür verschiedene Dehnwachse miteinander gemischt, insbesondere Wachse mit hoher Ausdehnung in verschiedenen, aneinander anschließeriden engen Temperaturbereichen. Auf diese Weise können die Dehnkurven, das heißt, die Volumenausdehnung der Wachse über die Temperatur, mehr oder weniger beliebig eingestellt werden.

Ein Ausführungsbeispiel der Erfindung ist der Zeichnung dargestellt und wird nachfolgend beschrieben. Es zeigen, jeweils in schematischer Darstellung,

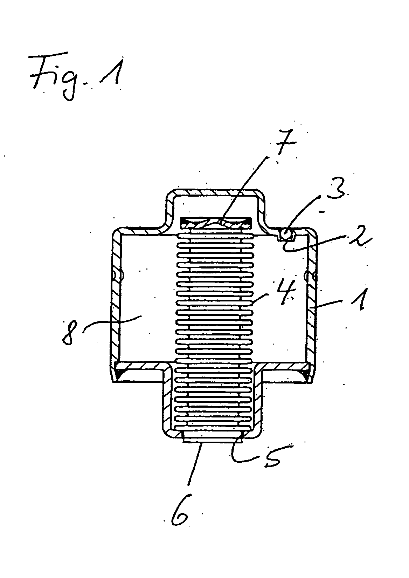

- Fig. 1: einen Schnitt durch das Gehäuse eines erfindungsgemäßen Temperaturweggebers,
- Fig. 2: Ausdehnungskurven eines Dehnwachses und zweier verschiedener Flüssigkeiten,
- Fig. 3: Ausdehnungskurven der Wachs-Flüssigkeits-Gemische bei einem Wachsanteil von 50 % und
- Fig. 4: entsprechende Kurven bei einem Wachsanteil von ein Drittel.

Der erfindungsgemäße Temperaturweggeber umfasst ein Gehäuse 1, welches über eine Befüllöffnung 2 mit dem temperaturabhängig Volumenveränderlichen Medium befüllbar ist. Nach Befüllung ist die Öffnung 2 durch eine Kugel 3 verschließbar.

In dem Gehäuse ist ein metallener Balg 4 angeordnet, der mit seinem einen Ende in eine Gehäuseöffnung 5 eingesetzt und dessen anderes Ende verschlossen ist. Der Balg 4 ist innen hohl, und sein Innenraum durch eine Öffnung 6 zugänglich. In diese Öffnung wird ein hier nicht dargestellter Federstift eingesetzt, der sich einerseits am geschlossenen Ende 7 im Balg 4 abstützt und dessen anderes Ende auf ein hier ebenfalls nicht dargestelltes Stellorgan wirkt.

Das Innere 8 des Gehäuses 1 ist mit einem Gemisch aus einem Dehnwachs und einer Flüssigkeit gefüllt. Steigt die Temperatur an, so dehnt sich das Gemisch aus und der Faltenbalg 4 wird komprimiert. Der im Faltenbalg 4 vorhandene Federstift fährt dadurch aus und betätigt das Stellorgan. Geht die Temperatur zurück, fährt der Federstift entsprechend der Volumenverringerung des Mediums im Inneren 8 des Gehäuses 1 wieder ein.

Aufgrund der Verwendung eines Gemisches aus einem Dehnwächs und einer Flüssigkeit ist eine hohe Volumenausdehnung des Mediums im Innenraum 8 des Gehäuses 1 gegeben. Zugleich ist jedoch die Hysterese des Mediums relativ gering. Dadurch lässt sich bei verhältnismäßig geringer Baugröße des Gehäuses 1 ein hoher Stellweg pro Grad Temperaturänderung erreichen.

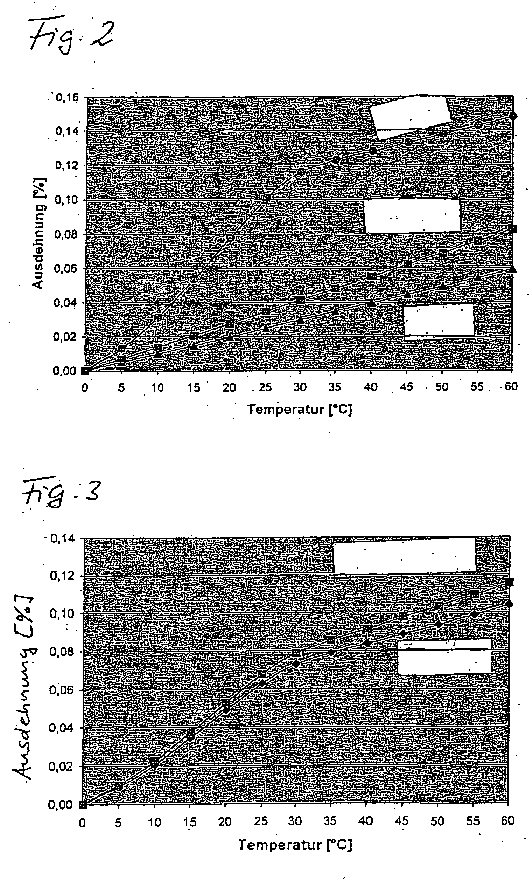

Fig. 2 zeigt in der mit Kreisen gekennzeichneten Kurve die prozentuale Volumenausdehnung eines für die erfindungsgemäße Mischung geeigneten Wachses, sowie in den beiden mit Rechtecken und Dreiecken gekennzeichneten Kurven die entsprechende Ausdehnung zweier für die Mischung geeigneter Flüssigkeiten. Man erkennt, dass das Dehnwachs in dem Regelbereich von 8°C bis 30°C eine große, weitgehend lineare Volumenausdehnung aufweist, die darüber deutlich geringer ist. Die beiden Flüssigkeiten weisen dagegen im Regelbereich zwar ebenfalls eine lineare, aber deutlich geringere Wärmeausdehnung auf, die sich im darüber hinausgehenden Temperaturbereich linear fortsetzt.

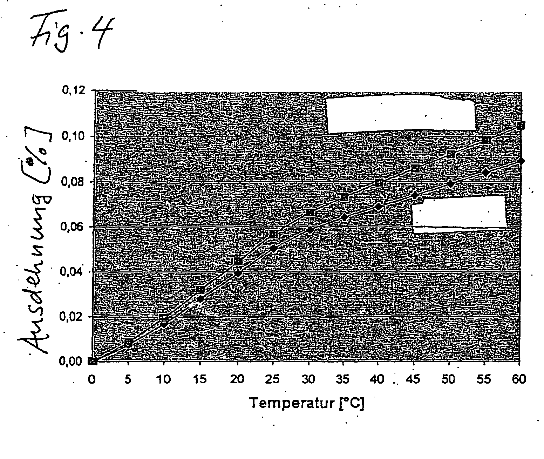

Fig. 3 zeigt die relative Volumenausdehnung zweier erfindungsgemäßer 1:1-Gemische aus einem Wachs und einer Flüssigkeit, die mit Quadraten und Rauten gekennzeichnet sind. Man erkennt, dass im Regelbereich von 8°C bis 30°C eine lineare, aber deutlich größere Volumenausdehnung vorliegt, als bei den reinen Flüssigkeiten. In dem darüber hinausgehenden Temperaturbereich nimmt die Wärmeausdehnung der Gemische in etwa auf die Ausdehnung der reinen Flüssigkeiten ab.

Es ist offensichtlich, dass damit eine feinere Regelung möglich ist, da sich bei gleicher Temperaturänderung ein größerer Stellweg ergibt. Dementsprechend fein kann ein mit einer solchen Mischung arbeitendes Radiatorventil eingestellt werden. Aufgrund der oberhalb des Regelbereiches abnehmenden Volumenausdehnung bleibt die maximale Ausdehnung im Gesamtarbeitsbereich von 0°C bis 60°C jedoch verhältnismäßig gering, so dass die Größe des Gehäuses 1 gering gehalten werden kann.

Die beiden ebenfalls mit Quadraten und Rauten gekennzeichneten Kurven von Fig. 4 zeigen das Ausdehnungsverhalten eines Gemisches aus demselben'Wachs und denselben Flüssigkeiten, jedoch mit einem Wachsanteil von lediglich einem Drittel und dementsprechend zwei Dritteln Flüssigkeit. Wie man sieht, erhält man auch hiermit eine hohe lineare Ausdehnung im Regelbereich, die darüber deutlich geringer ist.

### Bezugszeichenliste

- 1: Gehäuse
- 2: Befüllöffnung
- 3: Verschlusskugel
- 4: Balg
- 5: Gehäuseöffnung
- 6: Öffnung von 4
- 7: Ende von 4
- 8: Innenraum von 1

## Patentansprüche

1. Temperaturweggeber, insbesondere für temperaturabhängig geregelte Radiatorventile, mit einem Gehäuse (1), welches mit einem temperaturabhängig volumenveränderlichen Medium gefüllt ist, und einem das Gehäuse (1) volumenveränderbar verschließenden, insbesondere als Balg (4) ausgebildeten, mit einem Stellorgan koppelbaren und von dem Medium beaufschlagten Geber, der bei Temperaturänderungen entsprechend der dabei auftretenden Volumenänderung des Mediums von diesem verstellt wird,
**dadurch gekennzeichnet,**
**dass** das Medium durch ein Gemisch aus einem Dehnwachs und einer mit dem Dehnwachs kompatiblen Flüssigkeit gebildet ist.

2. Temperaturweggeber nach Anspruch 1,
**dadurch gekennzeichnet,**
**dass** als Flüssigkeit eine weitgehend inerte oder zumindest reaktionsträge Flüssigkeit vorgesehen ist.

3. Temperaturweggeber nach Anspruch 1 oder 2,
**dadurch gekennzeichnet,**
**dass** als Flüssigkeit ein Lösungsmittel oder ein lösungsmittelähnliches Mittel vorgesehen ist, in welchem das Dehnwachs weitgehend homogen, insbesondere emulsionsartig verteilbar ist.

4. Temperaturweggeber nach Anspruch 1 oder 2,
**dadurch gekennzeichnet,**
**dass** als Flüssigkeit ein Öl oder ein ölähnliches Mittel vorgesehen ist.

5. Temperaturweggeber nach Anspruch 4,
**dadurch gekennzeichnet,**
**dass** als Flüssigkeit ein Siliconöl vorgesehen ist.

6. Temperaturweggeber nach Anspruch 4,
**dadurch gekennzeichnet,**
**dass** als Flüssigkeit ein Paraffinöl vorgesehen ist.

7. Temperaturweggeber nach einem der vorhergehenden Ansprüche,
**dadurch gekennzeichnet,**
**dass** die Flüssigkeit geringe Hysterese in Bezug auf die Wärmedehnung aufweist.

8. Temperaturweggeber nach einem der vorhergehenden Ansprüche,
**dadurch gekennzeichnet,**
**dass** der Anteil Dehnwachs im Gemisch zwischen ca. 25 % und ca. 50 % beträgt.

9. Temperaturweggeber nach einem der vorhergehenden Ansprüche,
**dadurch gekennzeichnet,**
**dass** als Flüssigkeit ein übliches flüssiges Füllmittel für Temperaturweggeber vorgesehen ist.

10. Temperaturweggeber nach einem der vorhergehenden Ansprüche,
**dadurch gekennzeichnet,**
**dass** als Dehnwachs ein Wachs mit hoher, zumindest weitgehend linearer Ausdehnung im Regelbereich und möglichst geringer Ausdehnung darüber vorgesehen ist.

## Claims

1. A thermal actuator, in particular for radiator valves regulated in dependence on the temperature, comprising a housing (1) which is filled with a medium which changes its volume in dependence on the temperature, and a transducer which closes the housing (1) in a volume-changeable manner, is in particular made as a bellows (4), can be coupled to an adjustment member, is acted on by the medium and is displaced by the medium on temperature changes in accordance with the occurring volume change of the medium,
**characterised in that**
the medium is formed by a mixture of an expanding wax and a liquid compatible with the expanding wax.

2. A thermal actuator in accordance with claim 1, **characterised in that** a largely inert or at least slow-reacting liquid is provided as the liquid.

3. A thermal actuator in accordance with claim 1 or claim 2, **characterised in that** a solvent or a solvent-like medium is provided as the liquid in which the expanding wax can be distributed largely homogeneously, in particular in the manner of an emulsion.

4. A thermal actuator in accordance with claim 1 or claim 2, **characterised in that** an oil or an oil-like medium is provided as the liquid.

5. A thermal actuator in accordance with claim 4, **characterised in that** a silicone oil is provided as the liquid.

6. A thermal actuator in accordance with claim 4, **characterised in that** a paraffin oil is provided as the liquid.

7. A thermal actuator in accordance with any one of the preceding claims, **characterised in that** the liquid has low hysteresis with respect to the thermal expansion.

8. A thermal actuator in accordance with any one of the preceding claims, **characterised in that** the proportion of expanding wax in the mixture amounts to between approximately 25% and approximately 50%.

9. A thermal actuator in accordance with any one of the preceding claims, **characterised in that** a customary liquid filler for thermal actuators is provided as the liquid.

10. A thermal actuator in accordance with any one of the preceding claims, **characterised in that** a wax is provided as the expanding wax with a high expansion, which is at least largely linear, in the regulating range and with an expansion which is as low as possible above it.

## Revendications

1. Actionneur linéaire en fonction de la température, en particulier pour vannes de radiateur à régulation en fonction de la température, comportant un boîtier (1) qui est rempli d'un fluide à volume variable en fonction de la température, et un actionneur qui ferme le boîtier (1) avec possibilité de variation de volume, réalisé en particulier sous forme de soufflet (4), susceptible d'être accouplé à un organe de positionnement et sollicité par le fluide, actionneur qui, en cas de variations de température, est réglé par le fluide selon la variation de volume de celui-ci qui se produit alors, **caractérisé en ce que** le fluide est formé par un mélange d'une cire expansible et d'un liquide compatible à la cire expansible.

2. Actionneur linéaire en fonction de la température selon la revendication 1, **caractérisé en ce qu'**il est prévu à titre de liquide un liquide largement inerte ou au moins peu réactif.

3. Actionneur linéaire en fonction de la température selon l'une ou l'autre des revendications 1 et 2, **caractérisé en ce qu'**il est prévu à titre de liquide un solvant ou un produit similaire à un solvant dans lequel la cire expansible peut se répartir de façon amplement homogène, en particulier à la manière d'une émulsion.

4. Actionneur linéaire en fonction de la température selon l'une ou l'autre des revendications 1 et 2, **caractérisé en ce qu'**il est prévu à titre de liquide une huile ou un produit similaire à l'huile.

5. Actionneur linéaire en fonction de la température selon la revendication 4, **caractérisé en ce qu'**il est prévu à titre de liquide une huile de silicone.

6. Actionneur linéaire en fonction de la température selon la revendication 4, **caractérisé en ce qu'**il est prévu à titre de liquide une huile de paraffine.

7. Actionneur linéaire en fonction de la température selon l'une des revendications précédentes, **caractérisé en ce que** le liquide présente une hystérésis faible par rapport à l'expansion thermique.

8. Actionneur linéaire en fonction de la température selon l'une des revendications précédentes, **caractérisé en ce que** la part de cire expansible dans le mélange est entre approximativement 25 % et approximativement 50 %.

9. Actionneur linéaire en fonction de la température selon l'une des revendications précédentes, **caractérisé en ce qu'**il est prévu à titre de liquide une matière de remplissage liquide classique pour actionneurs linéaires en fonction de la température.

10. Actionneur linéaire en fonction de la température selon l'une des revendications précédentes, **caractérisé en ce qu'**il est prévu à titre de cire expansible une cire à haute expansion, au moins largement linéaire dans la plage de régulation et à expansion aussi faible que possible au-delà de cette plage.
